# EUROPÄISCHE PATENTSCHRIFT

(11) **EP 3 495 045 B1**
(45) Veröffentlichungstag und Bekanntmachung des Hinweises auf die Patenterteilung: **19.10.2022**
(21) Anmeldenummer: 17205772.1
(22) Anmeldetag: 06.12.2017
(51) Int. Cl.: B03C 3/45, B03C 3/017, B03C 3/06, B03C 3/12, B03C 3/36, B03C 3/41, B03C 3/49

(54) **BRENNWERTKESSEL**
CONDENSING BOILER
CHAUDIÈRES À CONDENSATION

(43) Veröffentlichungstag der Anmeldung: 12.06.2019
(73) Patentinhaber: Fröling Heizkessel- und Behälterbau, Gesellschaft m.b.H, 4710 Grieskirchen (AT)
(72) Erfinder: HUTTERER, Ernst, 4710 Grieskirchen (AT)
(74) Vertreter: SONN Patentanwälte OG

(56) Entgegenhaltungen:
- EP-A2- 2 926 909
- AT-A4- 505 295
- AT-B1- 517 955
- DE-A1- 1 557 019
- DE-A1-102008 012 151
- DE-U1-202010 016 019
- US-A- 4 726 814
- US-A- 5 282 885

## Beschreibung

Die Erfindung betrifft einen Brennwertkessel für Festbrennstoff mit einem Brennraum, mit einer mindestens einen Rauchgasweg aufweisenden Rauchgasführung, die mit dem Brennraum verbundenen ist, und mit einem Kondensationswärmetauscher, der im Rauchgasweg abwärts gerichtet ist und mehrere parallele erste Rauchgaszüge ausbildet, wobei sich der Taupunkt des Rauchgases im Normalbetrieb und/oder im Teillastbetrieb des Brennwertkessels im Rauchgasweg in den ersten Rauchgaszügen des Kondensationswärmetauschers befindet und der Brennwertkessel dazu eingerichtet ist, das Rauchgas bis zum Taupunkt im Kondensationswärmetauscher zu kühlen, womit eine Kondensationswärme eines im Rauchgas enthaltenen Wasserdampfes im Kondensationswärmetauscher frei wird und zum Wärmetausch beiträgt, wobei die Rauchgasführung einen Umlenkraum mit einem Umlenkraumboden und einen an den Umlenkraum anschließenden Sammelraum mit einem Sammelraumboden aufweist, wobei der Brennwertkessel einen elektrostatischen Abscheider aufweist.

Aus dem Stand der Technik sind diverse Brennwertkessel für Festbrennstoff bekannt (AT517955B1). All diesen Brennwertkesseln ist ein Kondensationswärmetauscher gemein, der den Taupunkt des Rauchgases in seinen parallelen Rauchgaszügen aufweist, die im Rauchgasweg der von einem Brennraum ausgehenden Rauchgasführung liegen. Der Ausfall von Kondensat im Kondensationswärmetauscher erhöht nicht nur den Wirkungsgrad des Brennwertkessels sondern reduziert auch dessen Partikelmission. Dennoch können derzeitige Brennwertkessel für Festbrennstoff eine geringe Partikelmission nicht erreichen.

Solche eine Partikelmission durch einen elektrostatischen Abscheider zu reduzieren, wie solche elektrostatische Abscheider bereits bei herkömmlichen Heizkesseln Verwendung finden, führt bei Brennwertkessel aufgrund eines ausfallenden Kondensat zu einer erhöhten Gefahr an Spannungsüberschlägen, was die Betriebssicherheit des Brennwertkessels gefährdet.

Aus DE 10 2008 012 151 A1 ist ein elektrostatischer Abscheider bekannt, der eine lonisierungsstufe innerhalb einer Kollektorstufe mit mehreren Kollektorrohren aufweist. Ein ummantelnder Wärmetauscher umgibt die Kollektorrohre.

EP 2 926 909 A2 offenbart einen Heizkessel mit einer Sprühelektrode 16. Im Rauchgasweg befindet sich ein Wärmetauscher.

Ein weiterer Heizkessel mit einer Sprühelektrode ist aus DE 20 2010 016019 U1 bekannt.

AT 517 955 B1 offenbart eine Heizeinrichtung mit abwärts gerichteten Wärmetauscherrohren.

Wärmetauscher und elektrische Abscheidevorrichtungen sind zudem aus DE 1 557 019, US 4,726,814 A und US 5,282,885 A bekannt.

Die Erfindung hat sich daher die Aufgabe gestellt, einen Brennwertkessel für Festbrennstoff der eingangs geschilderten Art in der Partikelemission zu reduzieren, ohne dabei die Betriebssicherheit des Brennwertkessels einzuschränken.

Die Erfindung löst die gestellte Aufgabe durch die Merkmale des Anspruchs 1. Erfindungsgemäß ist vorgesehen, dass der Taupunkt zwischen 20 und 60 Grad Celsius liegt und der Brennwertkessel unter Beibehaltung des Taupunkts des Rauchgases im Normalbetrieb und/oder im Teillastbetrieb in den ersten Rauchgaszügen des Kondensationswärmetauschers einen weiteren, im Rauchgasweg aufwärts gerichteten Wärmetauscher aufweist, der im Rauchgasweg mehrere parallele zweite Rauchgaszüge ausbildet, wobei der weitere, im Rauchgasweg aufwärts gerichtete Wärmetauscher über dem Brennraum angeordnet ist und die zweiten Rauchgaszüge in den Brennraum und in den Umlenkraum münden, wobei die ersten Rauchgaszüge des Kondensationswärmetauschers in den Sammelraumboden einmünden und der elektrostatische Abscheider mindestens eine Sprühelektrode im Rauchgasweg vor dem Kondensationswärmetauscher und wenigstens eine Kollektorelektrode in den ersten Rauchgaszügen des Kondensationswärmetauschers aufweist, wobei der weitere Wärmetauscher vor der Sprühelektrode angeordnet ist und die Sprühelektrode über dem Kondensationswärmetauscher angeordnet ist.

Indem der Brennwertkessel einen elektrostatischen Abscheider aufweist, kann bekanntermaßen die Partikelreduktion reduziert werden.

Dies erfindungsgemäß aber nicht unter verminderter Betriebssicherheit des Brennwertkessels, da der elektrostatische Abscheider mindestens eine Sprühelektrode im Rauchgasweg vor dem Kondensationswärmetauscher und wenigstens eine Kollektorelektrode in den ersten Rauchgaszügen des Kondensationswärmetauschers aufweist. Derart ist die Sprühelektrode also vor jener Stelle angeordnet, an welcher - aufgrund des Taupunkts im Rauchgas - mit einem erhöhten Ausfall von Feuchtigkeit zu rechnen ist. Spannungsüberschläge, beispielsweise zur Rauchgasführung, können damit standfest vermieden werden.

Zudem ist besonders von Vorteil, dass die Sprühelektrode vor dem im Rauchgasweg abwärts gerichteten Kondensationswärmetauscher vorgesehen ist. Kondensierendes Wasser wird damit unterstützt durch die Strömung des Rauchgases aus den ersten Rauchgaszügen und damit von der Sprühelektrode weg austragen.

Der erfindungsgemäße Brennwerkkessel kann sich also gegenüber Brennwertkesseln aus dem Stand der Technik nicht nur durch niedrige Partikelemission, sondern auch durch hohe Betriebssicherheit auszeichnen.

Im Allgemeinen wird erwähnt, dass der Brennwertkessel für Festbrennstoff, insbesondere aus Biomasse, beispielsweise Scheitholz, Pellets, Hackschnitzel etc., besonders eignen kann.

Die Gefahr von feuchtigkeitsbedingten Überschlägen wird zusätzlich dadurch vermindert, dass die Sprühelektrode über dem Kondensationswärmetauscher angeordnet ist. Zudem kann durch diese Position der Sprühelektrode im Brennwerkkessel deren eine verhältnismäßig leichte Zugänglichkeit für Reinigungs- und/oder Wartungszwecken ermöglicht werden.

Die örtliche Lage des Taupunkts im Rauchgasweg kann einfach bzw. reproduzierbarer eingestellt werden, weil die Rauchgasführung einen Umlenkraum mit einem Umlenkraumboden und einen an den Umlenkraum anschließenden Sammelraum mit einem Sammelraumboden aufweist, in welchen Sammelraumboden die ersten Rauchgaszüge des Kondensationswärmetauschers einmünden.

Der Sammelraum kann unter anderem zu einer Beruhigung der Strömung des Rauchgases vor dessen Eintritt in den Kondensationswärmetauscher beitragen - und damit auch die örtliche Lage des Taupunkts in den jeweiligen parallelen Rauchgaszügen in der Höhe bzw. Querschnittslage im Kondensationswärmetauscher aneinander angleichen. Dies kann die Steuerung des Brennwertkessels in den unterschiedlichen Betriebszuständen - beispielsweise Anfahrbetrieb, Teillastbetrieb, Normalbetrieb, etc. - erleichtern, um dessen Betriebssicherheit in Bezug auf seinen elektrostatischen Abscheider sicherzustellen.

Ist der Sammelraumboden gegenüber dem Umlenkraumboden tiefer angeordnet, kann dies den Strömungsweg im Sammelraum verlängert, damit die Partikelabscheidung des elektrostatischen Abscheiders verbessert.

Ist zudem zwischen Umlenkraum und Sammelraum eine dem Umlenkraumboden vorstehende Prallwand vorgesehen, kann diese Strömungsverjüngung beitragen, das Rauchgas der Sprühelektrode verbessert zuzuführen. Der Abscheidegrad des elektrostatischen Abscheiders kann damit weiter erhöht werden.

Die Sprühelektrode ist gegenüber dem Umlenkraumboden höher angeordnet, wodurch elektrische Überschläge von der Sprühelektrode weiter vermindert werden können. Die Betriebssicherheit des Brennwertkessels kann sich dadurch weiter erhöhen. Diese Betriebssicherheit erhöht sich weiter, wenn die Sprühelektrode im Sammelraum angeordnet ist. Zudem kann dort die Sprühelektrode die Aufladung der Partikel verbessern und damit den Abscheidegrad des elektrostatischen Abscheiders weiter erhöhen. Die Partikelemission des Brennwertkessels kann damit weiter vermindert werden.

Der Kondensationswärmetauscher kann auf einfache und zuverlässige Weise nass gereinigt werden, wenn der Brennwertkessel hierzu mindestens eine zum Versprühen von Flüssigkeit ausgebildete Sprühdüse aufweist, die im Rauchgasweg vor dem Kondensationswärmetauscher angeordnet ist. Insbesondere vermeidet dieses nasse Reinigen des Kondensationswärmetauschers eine Reduktion seines Wirkungsgrads - und damit auch Lageveränderungen am Taupunkt. Die stets hohe Betriebssicherheit des Brennwertkessels kann damit gewährleistet bleiben.

Indem die Sprühdüse auf die Sprühelektrode gerichtet ist, kann sie zudem zur Abreinigung der Sprühelektrode genutzt werden.

Ist die Sprühdüse oberhalb der Prallwand angeordnet und kann so zur Abreinigung des Sammelraums beitragen.

Der Brennwertkessel weist unter Beibehaltung des Taupunkts des Rauchgases im ersten Rauchgaszug des Kondensationswärmetauschers einen weiteren Wärmetauscher auf, der vor der Sprühelektrode angeordnet ist und im Rauchgasweg mehrere parallele zweite Rauchgaszüge ausbildet. Somit kann an der Sprühelektrode mit einem verminderten Temperaturbelastung gerechnet werden. Zudem kann der weitere Wärmetauschers vergleichsweise schnell niederschlagende grobe Rauchpartikel vor der Sprühelektrode im Rauchgas abfangen und die Sprühelektrode vor erhöhter Rußbelastung bewahren. Der weitere Wärmetauscher kann damit die Sprühelektrode besonders schützen und so die Standfestigkeit des Brennwerkkessels weiter erhöhen. Vorstehende Vorteile in Bezug auf die Stellfläche des Brennwertkessels können sich insbesondere ergeben, weil der weitere, im Rauchgasweg aufwärts gerichtete Wärmetauscher über den Brennraum angeordnet ist und die zweiten Rauchgaszüge in den Brennraum und in den Umlenkraum münden.

Diese Anordnung kann eine besonders wirksame Wärmesenke für das Rauchgas vor der Sprühelektrode darstellen - und diese gegenüber thermischer Überlastung standfest schützen. Außerdem kann diese

Anordnung des weiteren Wärmetauschers Ruß besonders wirkungsvoll zurückzuhalten, was den elektrostatischen Abscheider verbessert schützt und damit die Betriebssicherheit des Brennwertkessels weiter erhöht.

Die Konstruktion des Brennwertkessels ist weiter vereinfachbar, wenn Wärmetauscherrohre die ersten und/oder zweiten Rauchgaszüge ausbilden. Zudem kann dies zu einem robusten Wärmetauscher führen - insbesondere, wenn dieser die Funktion eines Kondensationswärmetauschers zu erfüllen hat. Im Allgemeinen wird erwähnt, dass die ersten Rauchgaszüge aus einem korrosionsbeständigen Material, insbesondere aus Edelstahl, oder korrosionsbeständigen beschichteten Material bestehen können.

Die Reinigung des Brennwertkessels kann weiter verbessert werden, wenn die ersten und/oder zweiten Rauchgaszüge im Rauchgasweg Wirbulatoreinsätze aufweisen, welche beweglich gelagert sind.

Vorzugsweise weist der Wirbulatoreinsatz einen Verdrängungszylinder mit einer mantelseitigen Wendel auf, um im Bereich der Rauchgaszüge eine vergleichsweise ausgeprägt turbulente Strömung zu garantieren.

Der Wirkungsgrad des elektrostatischen Abscheiders ist weiter erhöhbar, wenn die Wärmetauscherrohre des ersten Rauchgaszugs und/oder die Wirbulatoreinsätze als Kollektorelektrode wirkend ausgebildet sind. Insbesondere kann sich eine derartige Ausgestaltung durch eine hohe Abscheidefläche auszeichnen. Hierzu liegen die Wärmetauscherrohre des ersten Rauchgaszugs und/oder die Wirbulatoreinsätze auf einen gemeinsamen Bezugspotential zur Sprühelektrode, beispielsweise Masse des Brennwertkessels.

Die Konstruktion des Brennwertkessels kann vereinfacht werden, wenn dieser für den Kondensationswärmetauscher und für den weiteren Wärmetauscher einen gemeinsamen Wassermantel aufweist, in welchem sich der Kondensationswärmetauscher im Relation zum weiteren Wärmetauscher weiter nach unten erstreckt. Zudem kann durch diese Anordnung sichergestellt werden, dass sich der Taupunkt im Kondensationswärmetauscher befindet.

In den Figuren ist beispielsweise der Erfindungsgegenstand anhand einer Ausführungsvariante dargestellt. Es zeigen
Fig. 1. eine seitliche Schnittansicht eines Brennwertkessels und
Fig. 2. eine aufgerissene Draufsicht auf einen Teil des Brennwertkessels der Fig. 1. Der nach Fig. 1 beispielsweise dargestellte Brennwertkessel 1 weist eine Feuerung 2 für Festbrennstoff 3, nämlich einem Holzbrennstoff, einen über eine Brennraumtür 5 zugänglichen Brennraum 4 und eine an den Brennraum 4 angeschlossene Rauchgasführung 6 auf. Unterhalb eines Rosts 2.1 der Feuerung 2 ist ein Ascheraum 7 vorgesehen.

Im Rauchgasweg 8 der Rauchgasführung 6 ist ein Kondensationswärmetauscher 9 vorgesehen, der im Rauchgasweg 8 mehrere parallele -also im Rauchgasweg 8 parallel geschaltete- erste Rauchgaszüge 9.1, 9.2 ausbildet. Im Kondensationswärmetauscher 9 wird das Rauchgas bis höchstens zum Taupunkt gekühlt, womit die Kondensationswärme des im Rauchgas enthaltenen Wasserdampfes im Kondensationswärmetauscher 9 frei wird und zum Wärmetausch beiträgt. Im Allgemeinen wird erwähnt, dass der Taupunkt bei einer Holzverbrennung je nach Feuchtegehalt zwischen 20 und 60 Grad Celsius liegen kann.

Erfindungsgemäß weist der Brennwertkessel 1 einen elektrostatischen Abscheider 11 mit einer Sprühelektrode 11.1 und einer Kollektorelektrode 11.2 auf - womit die Partikelemission des Brennwertkessel 1 verringert wird. Die Sprühelektrode 11.1 ist im Rauchgasweg 8 vor dem Kondensationswärmetauscher 9 vorgesehen. Als Kollektorelektrode 11.2 dienen die ersten Rauchgaszüge 9.1, 9.2 des Kondensationswärmetauschers 9, indem die elektrisch leitenden Wärmetauscherrohre 10 mit einem Bezugspotential, nämlich im Ausführungsbeispiel Masse 12, zum Potential der Sprühelektrode 11.1 des Brennwertkessels 1 elektrisch leitend verbunden sind.

Um die Sprühelektrode 11.1 vor Anbackungen, beispielsweise Ruß, und vor Temperaturüberbelastung zu schützen, wird ein weiterer, zweiter Wärmetauscher 13 vorgesehen, welcher im Rauchgasweg 8 mehrere parallele zweite Rauchgaszüge 13.1, 13.2 ausbildet und vor der Sprühelektrode 11.1 angeordnet ist. Der zweiter Wärmetauscher 13 wird derart vorgesehen, dass sich der Taupunkt des Rauchgases im ersten Rauchgaszug 9.1, 9.2 des Kondensationswärmetauschers 9 befindet, zumindest im Normalbetrieb und/oder im Teillastbetrieb des Brennwertkessels 1. Damit ist sichergestellt, dass trotz der Kühlung des Rauchgases vor der Sprühelektrode 11.1 die Betriebssicherheit des Brennwertkessels 1 - trotz Ausfall von Kondenswasser in der Rauchgasführung 6 - nicht gefährdet ist.

Die ersten und zweiten Rauchgaszüge 9.1,9.2, 13.1, 13.2 werden - konstruktiv einfach gelöst - von beispielsweise runden Wärmetauscherrohren 10 ausgebildet. Die Wärmetauscherrohre 10 zumindest des ersten Rauchgaszugs 9.1, 9.2 bestehen aus einem korrosionsbeständigen Material, insbesondere aus Edelstahl.

Die Gefahr eines elektrischen Überschlags kann verringert werden, wenn der Kondensationswärmetauscher 9 im Rauchgasweg 8 abwärts gerichtet ist. Durch diese Anordnung des Kondensationswärmetauschers 9 in der Rauchgasführung 6 kann nämlich das Kondensat sicher von der vor dem Kondensationswärmetauscher 9 angeordneten Sprühelektrode 11.1 weggeleitet werden. Dies kann die Betriebssicherheit des Brennwertkessels 1 weiter erhöhen.

Die Sprühelektrode 11.1 ist über, insbesondere in vertikaler Richtung oberhalb, dem Kondensationswärmetauscher 9 angeordnet, was die elektrostatische Aufladung der in Richtung des Kondensationswärmetauschers 9 strömenden Partikel verbessert und damit der Wirkungsgrad des elektrostatischen Abscheiders 11 weiter erhöht.

Der Wirkungsgrad des elektrostatischen Abscheiders 11 kann weiter verbessert werden, wenn im Rauchgasweg 8 vor dem Kondensationswärmetauscher 9 ein Sammelraum 14 der Rauchgasführung 6 vorgesehen ist. Im Ausführungsbeispiel ist dieser rechteckig ausgebildet, jedoch ist auch eine Wannenform etc. vorstellbar. Dieser Sammelraum 14 beruhigt die Strömung das Rauchgas. Die ersten Rauchgaszüge 9.1, 9.2 münden in diesen strömungsberuhigten Sammelraum 14, und zwar in einen Sammelraumboden 14.1 des Sammelraums. Mit einer verbesserten Partikelabscheidung aus dem Rauchgas in diesen ersten Rauchgaszügen 9.1, 9.2 zu rechnen ist.

Der Sammelraum 14 schließt an Umlenkraum 25 der Rauchgasführung 6 an. Der Sammelraumboden 14.1 liegt tiefer als ein Umlenkraumboden 25.1 des Umlenkraums 25. Damit ist der Strömungsweg im Sammelraum 14 verlängert, was zur weiteren Beruhigung des Rauchgases beiträgt und damit die Partikelabscheidung des elektrostatischen Abscheiders 11 verbessert.

Die Sprühelektrode 11.1 ist gegenüber dem Umlenkraumboden 25.1 höher und im Sammelraum 14 angeordnet, der durch eine dem Umlenkraumboden 25.1 vorstehende Prallwand 26 vom Umlenkraum 25 abgegrenzt ist. Die Prallwand 26 führt zu einer Strömungsverjüngung in der Rauchgasführung 6, was die Umströmung der Sprühelektrode 11.1 mit Rauchgas 8 verbessert und damit den Abscheidegrad des elektrostatischen Abscheiders 11 weiter verbessert. Vorzugsweise läuft die Prallwand 26 in Richtung des Umlenkraums 25 gekröpft aus.

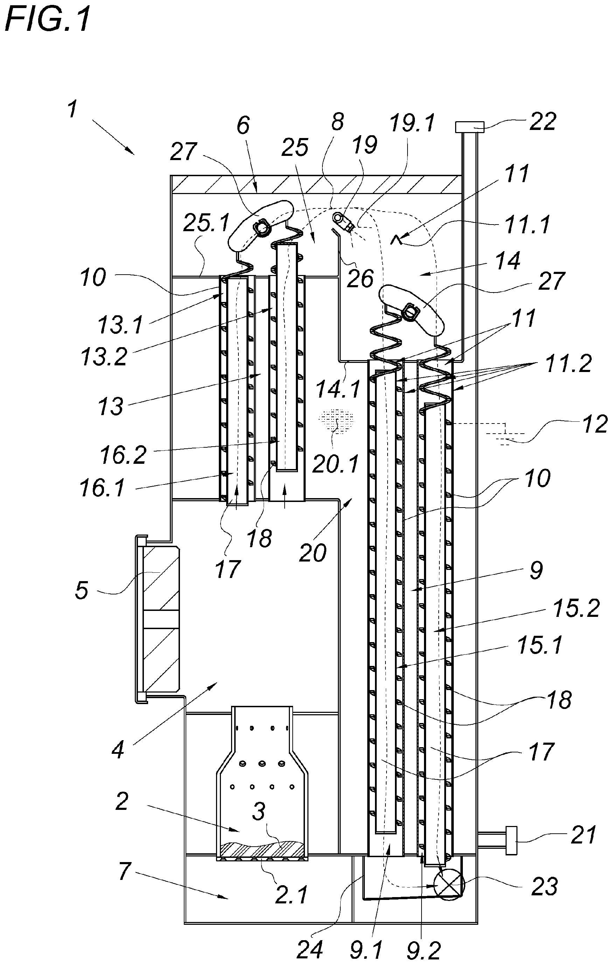

Wie der Fig. 1 ebenfalls zu entnehmen, weisen die ersten und zweiten Rauchgaszüge 9.1, 9.2, bzw. 13.1, 13.2 je einen Wirbulatoreinsatz 15.1, 15.2 bzw. 16.1, 16.2 im Rauchgasweg 8 auf. Dies erhöht den Wirkungsgrad im Wärmeübertrag der jeweilige Wärmetauscher 9, 13. Hierzu bestehen die Wirbulatoreinsätze 15.1, 15.2 bzw. 16.1, 16.2 je aus einen Verdrängungszylinder 17 mit einer mantelseitigen Wendel 18. Die Wirbulatoreinsätze 15.1, 15.2 bzw. 16.1, 16.2 sind beweglich gelagert und hierfür an einer Aufhängung 27 befestigt. Diese wippenförmig über diesbezügliche Wellen 27.1 bewegte Aufhängung 27 führt zu einer Auf- und Abbewegung der Wirbulatoreinsätze 15.1, 15.2 bzw. 16.1, 16.2, was die jeweiligen Rauchgaszüge 9.1,9.2, bzw. 13.1, 13.2 reinigt.

Zudem sind die Wirbulatoreinsatz 15.1, 15.2 mit dem Bezugspotential, nämlich Masse 12, des Brennwertkessels 1 verbunden und dienen damit auch als Kollektorelektrode 11.2 des elektrostatischen Abscheiders 11.

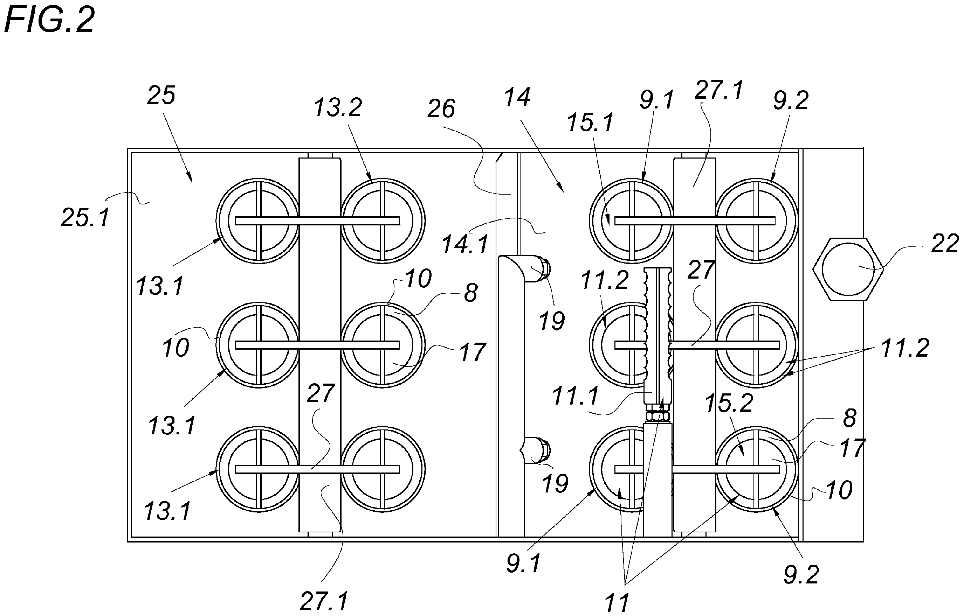

Außerdem ist den Figuren 1 und 2 zu entnehmen, dass der tieferliegende Sammelraumboden 14.1 des Sammelraums 14 die Aufhängung 27 der Wirbulatoreinsätze 15.1, 15.2 der ersten Rauchgaszüge 9.1, 9.2 von der Sprühelektrode 11.1 entfernt. Dies erhöht die Betriebssicherheit des elektrostatischen Abscheiders 11.

Der Brennwertkessel 1 weist eine Sprühdüse 19 auf, die Flüssigkeit 19.1 in den Rauchgasweg 8 einsprüht. Die Sprühdüse 19 ist vor dem Kondensationswärmetauscher 9 zu dessen Reinigung angeordnet und zwar über der Prallwand 26 - da diese auf die im Sammelraum 14 vorgesehene Sprühelektrode 11.1 gerichtet ist, kann die Sprühdüse 19 zudem auch die Sprühelektrode 11.1 mitreinigen.

Der Brennwertkessel 1 weist eine kompakte Standfläche auf, indem der zweite Wärmetauscher 13 im Rauchgasweg 8 aufwärts gerichtet und über, insbesondere in vertikaler Richtung oberhalb, dem Brennraum 4 angeordnet ist. Bevorzugt mündet der zweite Wärmetauscher 13 in den Brennraum 4. Damit kann der zweite Wärmetauscher 13 unmittelbar nach dem Brennraum 4 zu einer hohen Temperaturabnahme beitragen - aber auch Rauchgaspartikel standfest vor einem Verlassen des Brennraums 4 zurückhalten. Mit einer Beeinträchtigung des elektrostatischen Abscheiders 11 ist sohin nicht zu rechnen.

Konstruktive Einfachheit in der Ausbildung des Brennwertkessels 1 ergibt sich, indem dieser für den Kondensationswärmetauscher 9 und für den zweiten Wärmetauscher 13 einen gemeinsamen Wassermantel 20 für das andeutungsweise in Fig. 1 dargestellte Kesselwasser 20.1 aufweist.

Zudem erstreckt sich der Kondensationswärmetauscher 9 im Relation zum zweiten Wärmetauscher 13 weiter nach unten, was auf konstruktiv einfache Weise erreicht, dass sich der Taupunkt stets im Kondensationswärmetauscher 9 befindet.

Wie außerdem der Fig. 1 zu entnehmen, mündet der Vorlauf 22 des Brennwertkessels 1 über der Höhe des oberen Endes des Kondensationswärmetauschers 9 in den Wassermantel 20 ein. Der Rücklauf 21 der Brennwertkessels 1 mündet auf Höhe des unteren Endes des zweiten Wärmetauschers 13 in den Wassermantel 20 ein.

Der Brennwertkessel 1 weist ein Saugzuggebläse 23 auf, das im Rauchgasweg 8 nach dem Kondensationswärmetauscher 9 angeordnet ist und je nach Saugstufe den Taupunkt im Kondensationswärmetauscher 9 sicherstellt. Über eine nicht näher dargestellte Steuerung/Regelung des Saugzuggebläses kann entsprechend dem Betriebszustand des Brennwertkessels der Taupunkt des Rauchgases im ersten Rauchgaszug beibehalten werden.

Unterhalb des Kondensationswärmetauschers 9 ist eine Kondensat-Sammelwanne 24 mit einem nicht näher dargestellten Ablauf vorgesehen.

Die parallelen Rauchgaszüge 9.1, 9.2, bzw. 13.1, 13.2 sind beispielsweise in drei Zeilen mit zwei Spalten angeordnet, wie dies in Fig. 2 zu erkennen ist.

## Patentansprüche

1. Brennwertkessel (1)
für Festbrennstoff (3) mit einem Brennraum (4), mit einer mindestens einen Rauchgasweg (8) aufweisenden Rauchgasführung (6), die mit dem Brennraum (4) verbunden
ist, und mit einem Kondensationswärmetauscher (9), der im Rauchgasweg (8) abwärts gerichtet ist und mehrere parallele erste Rauchgaszüge (9.1, 9.2) ausbildet, wobei sich der Taupunkt des Rauchgases im Normalbetrieb und/oder im Teillastbetrieb des Brennwertkessels (1) im Rauchgasweg (8) in den ersten Rauchgaszügen (9.1, 9.2) des Kondensationswärmetauschers (9) befindet und der Brennwertkessel (1)
dazu eingerichtet ist, das Rauchgas bis zum Taupunkt im Kondensationswärmetauscher (9) zu kühlen, womit eine Kondensationswärme eines im Rauchgas enthaltenen Wasserdampfes im Kondensationswärmetauscher (9) frei wird und zum Wärmetausch beiträgt, wobei die Rauchgasführung (6) einen Umlenkraum (25) mit einem Umlenkraumboden (25.1) und einen an den Umlenkraum (25) anschließenden Sammelraum (14) mit einem Sammelraumboden (14.1) aufweist, wobei der Brennwertkessel (1) einen elektrostatischen Abscheider (11) aufweist, **dadurch gekennzeichnet, dass** der Taupunkt zwischen 20 und 60 Grad Celsius liegt und der Brennwertkessel (1) unter Beibehaltung des Taupunkts des Rauchgases im Normalbetrieb und/oder im Teillastbetrieb in den ersten Rauchgaszügen (9.1, 9.2) des Kondensationswärmetauschers (9) einen weiteren, im Rauchgasweg (8) aufwärts gerichteten Wärmetauscher (13) aufweist, der im Rauchgasweg (8) mehrere parallele zweite Rauchgaszüge (13.1, 13.2) ausbildet, wobei der weitere, im Rauchgasweg (8) aufwärts gerichtete Wärmetauscher (13) über dem Brennraum (4) angeordnet ist und die zweiten Rauchgaszüge (13.1, 13.2) in den Brennraum (4) und in den Umlenkraum (25) münden, wobei die ersten Rauchgaszüge (9.1,9.2) des Kondensationswärmetauschers (9) in den Sammelraumboden (14.1) einmünden und der elektrostatische Abscheider (11) mindestens eine Sprühelektrode (11.1) im Rauchgasweg (8) vor dem Kondensationswärmetauscher (9) und wenigstens eine Kollektorelektrode (11.2) in den ersten Rauchgaszügen (9.1,9.2) des Kondensationswärmetauschers (9) aufweist, wobei der weitere Wärmetauscher (13) vor der Sprühelektrode (11.1) angeordnet ist und die Sprühelektrode (11.1) über dem Kondensationswärmetauscher (9) angeordnet ist.

2. Brennwertkessel nach Anspruch 1, **dadurch gekennzeichnet, dass** der Sammelraumboden (14.1) gegenüber dem Umlenkraumboden (25.1) tiefer angeordnet ist.

3. Brennwertkessel nach Anspruch 1 oder 2, **dadurch gekennzeichnet, dass** zwischen Umlenkraum (25) und Sammelraum (14) eine dem Umlenkraumboden (25.1) vorstehende Prallwand (26) vorgesehen ist.

4. Brennwertkessel nach einem der Ansprüche 1 bis 3, **dadurch gekennzeichnet, dass** die Sprühelektrode (11.1) gegenüber dem Umlenkraumboden (25.1) höher angeordnet ist.

5. Brennwertkessel nach einem der Ansprüche 1 bis 4, **dadurch gekennzeichnet, dass** die Sprühelektrode (11.1 ) im Sammelraum (14) angeordnet ist.

6. Brennwertkessel nach einem der Ansprüche 1 bis 5, **dadurch gekennzeichnet, dass** der Brennwertkessel (1) mindestens eine zum Versprühen von Flüssigkeit (19.1) ausgebildete Sprühdüse (19) aufweist, die im Rauchgasweg (8) vor dem Kondensationswärmetauscher (9) zur Reinigung des Kondensationswärmetauschers (9) angeordnet ist.

7. Brennwertkessel nach Anspruch 6, **dadurch gekennzeichnet, dass** die Sprühdüse (19) auf die Sprühelektrode (11.1) gerichtet ist.

8. Brennwertkessel nach Anspruch 6 oder 7, **dadurch gekennzeichnet, dass** die Sprühdüse (19) oberhalb der Prallwand (26) angeordnet ist.

9. Brennwertkessel nach einem der Ansprüche 1 bis 8, **dadurch gekennzeichnet, dass** Wärmetauscherrohre (10) die ersten und/oder die zweiten Rauchgaszüge (9.1,9.2 bzw. 13.1,13.2) ausbilden.

10. Brennwertkessel nach einem der Ansprüche 1 bis 9, **dadurch gekennzeichnet, dass** die ersten und/oder zweiten Rauchgaszüge (9.1, 9.2 bzw. 13.1, 13.2) im Rauchgasweg (8) Wirbulatoreinsätze (15.1, 15.2) aufweisen, welche beweglich gelagert sind.

11. Brennwertkessel nach Anspruch 10, **dadurch gekennzeichnet, dass** der Wirbulatoreinsatz (15.1, 15.2) einen Verdrängungszylinder (17) mit einer mantelseitigen Wendel (18) aufweist.

12. Brennwertkessel nach einem der Ansprüche 1 bis 11, **dadurch gekennzeichnet, dass** die Wärmetauscherrohre (10) des ersten Rauchgaszugs (9.1, 9.2) und/oder die Wirbulatoreinsätze (15.1, 15.2) als Kollektorelektrode (11.2) wirkend ausgebildet sind.

13. Brennwertkessel nach einem der Ansprüche 1 bis 12, **dadurch gekennzeichnet, dass** der Brennwertkessel (1) für den Kondensationswärmetauscher (9) und für den weiteren Wärmetauscher (13) einen gemeinsamen Wassermantel (20) aufweist, in welchem sich der Kondensationswärmetauscher (9) in Relation zum weiteren Wärmetauscher (13) weiter nach unten erstreckt.

## Claims

1. Condensing boiler (1) for solid fuel (3), comprising a combustion chamber (4), a flue gas conduit (6) that has at least one flue gas path (8) and is connected to the combustion chamber (4), and a condensation heat exchanger (9) that is directed downwards in the flue gas path (8) and forms a plurality of parallel first flue gas passages (9.1, 9.2), the dew point of the flue gas in normal operation and/or in partial-load operation of the condensing boiler (1) being located in the flue gas path (8) in the first flue gas passages (9.1, 9.2) of the condensation heat exchanger (9), and the condensing boiler (1) being designed to cool the flue gas to the dew point in the condensation heat exchanger (9), as a result of which condensation heat of water vapour contained in the flue gas is released in the condensation heat exchanger (9) and contributes to heat exchange, the flue gas conduit (6) having a deflection space (25) that has a deflection space floor (25.1), and a collection space (14) that has a collection space floor (14.1) and is connected to the deflection space (25), the condensing boiler (1) having an electrostatic precipitator (11), **characterised in that** the dew point is between 20 and 60 degrees Celsius, and the condensing boiler (1), while maintaining the dew point of the flue gas in normal operation and/or in partial-load operation in the first flue gas passages (9.1, 9.2) of the condensation heat exchanger (9), has a further heat exchanger (13) that is directed upwards in the flue gas path (8) and forms a plurality of parallel second flue gas passages (13.1, 13.2) in the flue gas path (8), the further heat exchanger (13), which is directed upwards in the flue gas path (8), being arranged above the combustion space (4) and the second flue gas passages (13.1, 13.2) opening into the combustion space (4) and the deflection space (25), the first flue gas passages (9.1, 9.2) of the condensation heat exchanger (9) opening into the collection space floor (14.1), and the electrostatic precipitator (11) having at least one discharge electrode (11.1) upstream of the condensation heat exchanger (9) in the flue gas path (8) and at least one collector electrode (11.2) in the first flue gas passages (9.1, 9.2) of the condensation heat exchanger (9), the further heat exchanger (13) being arranged upstream of the discharge electrode (11.1) and the spray electrode (11.1) being arranged above the condensation heat exchanger (9).

2. Condensing boiler according to claim 1, **characterised in that** the collection space floor (14.1) is arranged lower than the deflection space floor (25.1).

3. Condensing boiler according to either claim 1 or claim 2, **characterised in that** a baffle wall (26) projecting from the deflection space floor (25.1) is provided between the deflection space (25) and the collection space (14).

4. Condensing boiler according to any of claims 1 to 3, **characterised in that** the discharge electrode (11.1) is arranged higher than the deflection space floor (25.1).

5. Condensing boiler according to any of claims 1 to 4, **characterised in that** the discharge electrode (11.1) is arranged in the collection space (14).

6. Condensing boiler according to any of claims 1 to 5, **characterised in that** the condensing boiler (1) has at least one spray nozzle (19) that is designed for spraying liquid (19.1) and is arranged upstream of the condensation heat exchanger (9) in the flue gas path (8) for cleaning the condensation heat exchanger (9).

7. Condensing boiler according to claim 6, **characterised in that** the spray nozzle (19) is directed onto the discharge electrode (11.1).

8. Condensing boiler according to either claim 6 or claim 7, **characterised in that** the spray nozzle (19) is arranged above the baffle wall (26).

9. Condensing boiler according to any of claims 1 to 8, **characterised in that** the heat exchanger tubes (10) form the first and/or the second flue gas passages (9.1, 9.2 and 13.1, 13.2).

10. Condensing boiler according to any of claims 1 to 9, **characterised in that** the first and/or second flue gas passages (9.1, 9.2 and 13.1, 13.2) have turbulator inserts (15.1, 15.2) in the flue gas path (8), which turbulator inserts are movably mounted.

11. Condensing boiler according to claim 10, **characterised in that** the turbulator insert (15.1, 15.2) has a displacement cylinder (17) having a casing-side spiral (18).

12. Condensing boiler according to any of claims 1 to 11, **characterised in that** the heat exchanger tubes (10) of the first flue gas passage (9.1, 9.2) and/or the turbulator inserts (15.1, 15.2) are designed as a collector electrode (11.2).

13. Condensing boiler according to any of claims 1 to 12, **characterised in that** the condensing boiler (1) has a common water jacket (20) for the condensation heat exchanger (9) and for the further heat exchanger (13), in which water jacket the condensation heat exchanger (9) extends further downwards in relation to the further heat exchanger (13).

## Revendications

1. Chaudière à condensation (1) pour combustible solide (3) avec une chambre de combustion (4), avec une conduite de gaz de fumée (6) présentant au moins une voie de gaz de fumée (8), qui est reliée à la chambre de combustion (4), et avec un échangeur de chaleur de condensation (9), qui est dirigé vers le bas dans la voie de gaz de fumée (8) et réalise plusieurs premiers carneaux de fumée (9.1, 9.2) parallèles, dans laquelle le point de rosée du gaz de fumée dans le fonctionnement normal et/ou dans le fonctionnement en charge partielle de la chaudière à condensation (1) se trouve dans la voie de gaz de fumée (8) dans les premiers carneaux de fumée (9.1, 9.2) de l'échangeur de chaleur de condensation (9) et la chaudière à condensation (1) est conçue pour refroidir le gaz de fumée jusqu'au point de rosée dans l'échangeur de chaleur de condensation (9), ce qui libère une chaleur de condensation d'une vapeur d'eau contenue dans le gaz de fumée dans l'échangeur de chaleur de condensation (9) et contribue à l'échange de chaleur, dans laquelle la conduite de gaz de fumée (6) présente une chambre de déviation (25) avec un fond de chambre de déviation (25.1) et une chambre collectrice (14) se raccordant à la chambre de déviation (25) avec un fond de chambre collectrice (14.1), dans laquelle la chaudière à condensation (1) présente un séparateur électrostatique (11), **caractérisée en ce que** le point de rosée est compris entre 20 et 60 degrés Celsius et la chaudière à condensation (1) présente avec maintien du point de rosée du gaz de fumée dans le fonctionnement normal et/ou dans le fonctionnement en charge partielle dans les premiers carneaux de fumée (9.1, 9.2) de l'échangeur de chaleur de condensation (9) un autre échangeur de chaleur (13) dirigé vers le haut dans la voie de gaz de fumée (8), qui réalise dans la voie de gaz de fumée (8) plusieurs deuxièmes carneaux de fumée (13.1, 13.2) parallèles, dans laquelle l'autre échangeur de chaleur (13) dirigé vers le haut dans la voie de gaz de fumée (8) est disposé au-dessus de la chambre de combustion (4) et les deuxièmes carneaux de fumée (13.1, 13.2) débouchent dans la chambre de combustion (4) et dans la chambre de déviation (25), dans laquelle les premiers carneaux de fumée (9.1, 9.2) de l'échangeur de chaleur de condensation (9) débouchent dans le fond de chambre collectrice (14.1) et le séparateur électrostatique (11) présente au moins une électrode à couronne (11.1) dans la voie de gaz de fumée (8) devant l'échangeur de chaleur de condensation (9) et au moins une électrode collectrice (11.2) dans les premiers carneaux de fumée (9.1, 9.2) de l'échangeur de chaleur de condensation (9), dans laquelle l'autre échangeur de chaleur (13) est disposé devant l'électrode à couronne (11.1) et l'électrode à couronne (11.1) est disposée au-dessus de l'échangeur de chaleur de condensation (9).

2. Chaudière à condensation selon la revendication 1, **caractérisée en ce que** le fond de chambre collectrice (14.1) est disposé plus en profondeur par rapport au fond de chambre de déviation (25.1).

3. Chaudière à condensation selon la revendication 1 ou 2, **caractérisée en ce qu'**une chicane (26) faisant saillie du fond de chambre de déviation (25.1) est prévue entre la chambre de déviation (25) et la chambre collectrice (14).

4. Chaudière à condensation selon l'une quelconque des revendications 1 à 3, **caractérisée en ce que** l'électrode à couronne (11.1) est disposée plus haut par rapport au fond de chambre de déviation (25.1).

5. Chaudière à condensation selon l'une quelconque des revendications 1 à 4, **caractérisée en ce que** l'électrode à couronne (11.1) est disposée dans la chambre collectrice (14).

6. Chaudière à condensation selon l'une quelconque des revendications 1 à 5, **caractérisée en ce que** la chaudière à condensation (1) présente au moins une buse de pulvérisation (19) réalisée pour la pulvérisation de liquide (19.1), qui est disposée dans la voie de gaz de fumée (8) devant l'échangeur de chaleur de condensation (9) pour le nettoyage de l'échangeur de chaleur de condensation (9).

7. Chaudière à condensation selon la revendication 6, **caractérisée en ce que** la buse de pulvérisation (19) est dirigée sur l'électrode à couronne (11.1).

8. Chaudière à condensation selon la revendication 6 ou 7, **caractérisée en ce que** la buse de pulvérisation (19) est disposée au-dessus de la chicane (26).

9. Chaudière à condensation selon l'une quelconque des revendications 1 à 8, **caractérisée en ce que** des tubes d'échangeur de chaleur (10) réalisent les premiers et/ou les deuxièmes carneaux de fumée (9.1, 9.2 ou 13.1, 13.2).

10. Chaudière à condensation selon l'une quelconque des revendications 1 à 9, **caractérisée en ce que** les premiers et/ou deuxièmes carneaux de fumée (9.1, 9.2 ou 13.1, 13.2) présentent dans la voie de gaz de fumée (8) des inserts de turbulateur (15.1, 15.2), lesquels sont montés mobiles.

11. Chaudière à condensation selon la revendication 10, **caractérisée en ce que** l'insert de turbulateur (15.1, 15.2) présente un cylindre de refoulement (17) avec une spirale (18) côté enveloppe.

12. Chaudière à condensation selon l'une quelconque des revendications 1 à 11, **caractérisée en ce que** les tubes d'échangeur de chaleur (10) du premier carneau de fumée (9.1, 9.2) et/ou les inserts de turbulateur (15.1, 15.2) sont réalisés de manière à agir comme une électrode collectrice (11.2).

13. Chaudière à condensation selon l'une quelconque des revendications 1 à 12, **caractérisée en ce que** la chaudière à condensation (1) présente pour l'échangeur de chaleur de condensation (9) et pour l'autre échangeur de chaleur (13) une chemise d'eau (20) commune, dans laquelle l'échangeur de chaleur de condensation (9) s'étend plus vers le bas par rapport à l'autre échangeur de chaleur (13).
